# FASCICULE DE BREVET EUROPEEN

(11) **EP 1 115 048 B1**
(45) Date de publication et mention de la délivrance du brevet: **28.04.2004**
(21) Numéro de dépôt: 00490004.9
(22) Date de dépôt: 19.01.2000
(51) Int. Cl.: G05D 16/06, E03C 1/10

(54) **Dispositif de contrôle de l'écoulement d'un fluide au moyen d'une soupape différentielle**
Differentialventildurchflussregelvorrichtung
Differential valve fluid flow control device

(30) Priorité: 24.12.1999 FR 9916451
(43) Date de publication de la demande: 11.07.2001
(73) Titulaire: WATTS EUROTHERM S.A., 80390 Fressenneville (FR)
(72) Inventeur: Bommelaer, Christian, 80460 Friaucourt (FR); Bongrand, Laurent, 36400 Verneuil s/Igneraie (FR)
(74) Mandataire: Hennion, Jean-Claude

(56) Documents cités:
- FR-A- 2 059 386
- GB-A- 870 882
- US-A- 4 159 025
- US-A- 5 363 875

## Description

L'invention se rapporte à un dispositif de contrôle de l'écoulement d'un fluide au moyen d'une soupape différentielle.

Il est nécessaire notamment sur les réseaux de distribution d'eau potable d'éviter toute pollution accidentelle de ces réseaux.

Une pollution du réseau de distribution pourrait se produire lorsqu'en amont d'un point de distribution en cours d'utilisation, c'est à dire alimentant par exemple à l'aide d'un tuyau, une citerne agricole utilisée pour le traitement phytosanitaire des cultures, il se produit un soutirage puissant par exemple pour un essai de lance à incendie.

Ce soutirage provoque alors en aval de ce point de soutirage par un effet de dépression le pompage du liquide contenu dans la citerne agricole entraînant ainsi les produits phytosanitaires dans le réseau de distribution.

Pour éviter un tel phénomène, il est connu de faire appel à un dispositif appelé disconnecteur.

Ce dispositif fait appel à une soupape différentielle.

Cette soupape différentielle contrôle le déplacement d'un obturateur qui, lorsqu'il est écarté de son siège, permet la mise à l'air libre d'une chambre dans laquelle transite le fluide provenant de l'amont vers l'aval.

Une telle soupape est logée dans un corps présentant une entrée et une sortie, chacune de ses entrée et sortie étant équipée d'un clapet anti-retour.

L'obturateur est porté par une tige guidée en translation, à laquelle tige est fixée une membrane.

Cette membrane est d'un coté soumise à la pression prélevée en amont du clapet anti-retour disposé à l'entrée et de l'autre coté soumise à la pression aval.

Par le jeu des surfaces et d'un ressort, l'ensemble est équilibré de manière qu'en fonctionnement normal, c'est à dire avec un différentiel de pression prédéterminé, l'obturateur s'appuie sur son siège.

La pression amont doit être supérieure à la pression aval.

Lorsque ce différentiel de pression se réduit en dessous de la valeur prédéterminée, l'obturateur s'écarte de son siège sous l'effet du ressort et de ce fait l'eau contenue dans la chambre s'écoule à l'extérieur et il y a disconnection entre l'entrée et la sortie.

On reproche à ce type de valve la complexité du montage, le trop grand nombre de pièces, l'encombrement important, etc ...

L'invention se propose de remédier notamment à ces inconvénients.

A cet effet, l'invention a pour objet un dispositif de contrôle de l'écoulement d'un fluide comprenant un corps délimitant une chambre dite intermédiaire présentant une entrée, une sortie et une conduite d'évacuation, laquelle conduite d'évacuation est contrôlée par une soupape différentielle comprenant elle-même un obturateur déplacé par une membrane immobilisée en périphérie dont l'une dite amont de ses deux faces est soumise à la pression prélevée en amont de la chambre intermédiaire et l'autre dite aval soumise à la pression du fluide dans ladite chambre intermédiaire, ce dispositif de contrôle étant caractérisé en ce que :
- la membrane présente en son centre une découpe,
- la zone de la face, dite aval, bordant cette découpe constitue l'obturateur prenant appui sur son siège et
- la zone de la face, dite amont, bordant cette découpe porte un piston creux axé sur la dite découpe, lequel piston creux constitue localement la conduite d'évacuation.

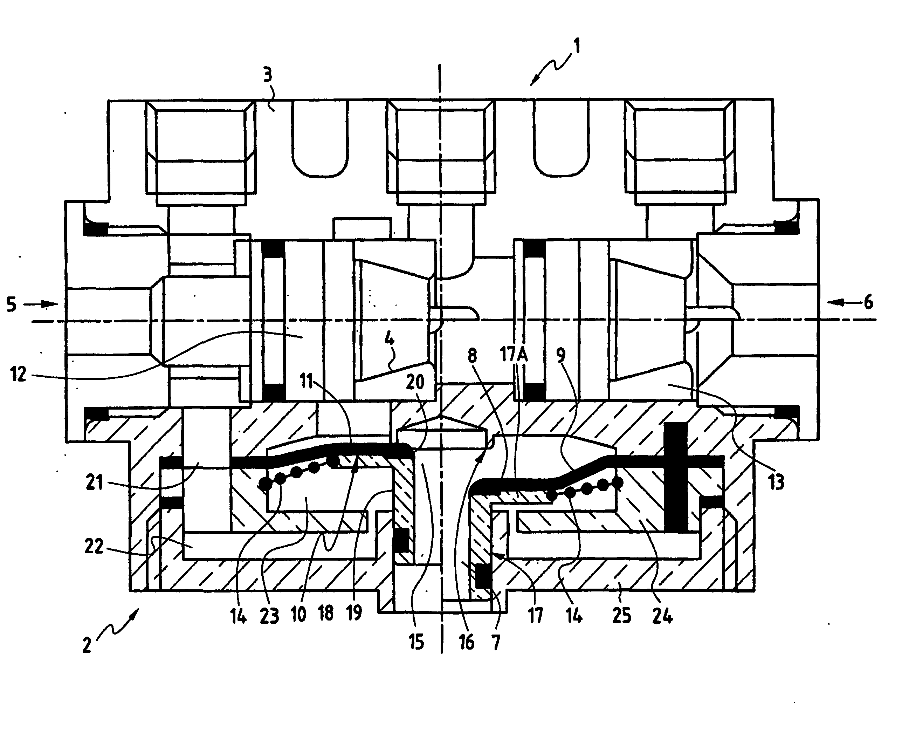

L'invention sera bien comprise à l'aide de la description ci-après à titre d'exemple non limitatif en regard du dessin ci-annexé qui représente schématiquement un dispositif en coupe axiale.

En se reportant au dessin, on voit un dispositif 1 de contrôle de l'écoulement d'un fluide au moyen d'une soupape 2 différentielle.

Ce dispositif permet lors d'une brusque baisse de pression en amont d'éviter une pollution accidentelle du réseau.

Classiquement, le dispositif de contrôle comprend un corps 3 délimitant une chambre 4 dite intermédiaire présentant une entrée 5, une sortie 6 et une conduite 7 d'évacuation, laquelle conduite 7 d'évacuation est contrôlée par une soupape différentielle 2 comprenant elle-même un obturateur 8 déplacé par une membrane 9 immobilisée en périphérie dont l'une (10) dite amont de ses deux faces 10, 11 est soumise à la pression prélevée en amont de la chambre intermédiaire et l'autre (11) dite aval soumise à la pression du fluide dans ladite chambre intermédiaire.

Les conduites d'entrée et de sortie de la chambre sont équipées d'un clapet 12, 13 anti-retour.

Le clapet 12 anti-retour situé sur la conduite d'entrée est réglé pour avoir une pression d'ouverture assez haute.

Par le jeu des surfaces sur lesquelles s'exercent la pression amont et la pression de la chambre intermédiaire et, accessoirement, la force développée par un ressort 14, l'ensemble est équilibré de manière qu'en fonctionnement normal, c'est à dire avec un différentiel de pression prédéterminé entre l'amont et l'aval, l'obturateur s'appuie sur son siège.

Lorsque ce différentiel de pression se réduit en dessous de la valeur prédéterminée, l'obturateur s'écarte de son siège et, de ce fait, l'eau contenue dans la chambre intermédiaire s'écoule à l'extérieur et il y a alors disconnection entre l'entrée et la sortie.

Ce dispositif doit être monté de manière à permettre un écoulement par gravité de l'eau lorsque le dispositif est en position de disconnecteur.

Selon une caractéristique de l'invention :
- la membrane 9 présente en son centre une découpe 15,
- la zone de la face 11 dite aval bordant cette découpe 15 constitue l'obturateur prenant appui sur son siège 16 et
- la zone de la face 10 dite amont bordant cette découpe porte un piston 17 creux axé sur la dite découpe 15, lequel piston creux constitue localement la conduite 7 d'évacuation.

La conduite 7 débouche à l'atmosphère.

La face externe 18 du piston 17 creux constitue localement une portée de guidage en translation de ce piston.

Lorsque l'enveloppe délimitant le corps du dispositif est d'épaisseur réduite et ne peut donc assurer un guidage correct du piston, le corps du dispositif présente alors un court manchon 19 de longueur suffisante pour, avec la face externe du piston, réaliser ce guidage suffisant.

Un joint torique réalise l'étanchéité entre le manchon et le piston.

Lorsque l'obturateur est écarté du siège, la membrane et le piston creux forme un entonnoir par lequel l'écoulement se fait par gravité.

L'eau peut donc s'écouler librement sans qu'aucun obstacle nuise à cet écoulement.

Le piston 17 creux présente en sa partie supérieure, c'est à dire celle en contact avec la membrane, une collerette 17A sur laquelle se fixe la partie centrale de la membrane.

Cette collerette confère à la zone de la membrane formant l'obturateur une bonne rigidité et la forme souhaitée.

Par exemple, l'obturateur sera plan ou légèrement convexe pour s'appliquer sur son siège.

La fixation de la membrane sur la collerette se fait par exemple par collage.

Il sera avantageusement prévu un lamage 20 au niveau de la face d'appui de la collerette sur la membrane.

Le siège 16 de l'obturateur est formé par une nervure formant un anneau

Ce siège est donc tourné vers le bas et vers le piston creux.

Le volume entourant cette nervure est en communication avec le volume situé entre les deux clapets anti-retour et définit ainsi la chambre intermédiaire.

Les particules que pourraient transporter le fluide ne peuvent donc s'accumuler au niveau de ce siège.

Dans l'exemple représenté, les conduites d'entrée et de sortie sont coaxiales et sont donc pourvues chacune d'un clapet anti-retour et entre les deux clapets est prévu un court tronçon de liaison.

En amont du clapet anti-retour situé sur la conduite d'entrée est réalisé un canal 21 qui débouche dans une chambre 22 dite de transition qui s'étend sous la surface occupée par la membrane.

Cette chambre 22 de transition communique avec une chambre 23 dite chambre amont délimitée localement par la face dite amont de la membrane et une pièce 24 montée amovible venant pincer le bord de cette membrane.

Cette chambre dite amont loge un moyen élastique qui prend appui d'une part sur le piston et notamment sur la collerette et sur une surface d'appui de la chambre dite amont.

La chambre de transition est délimitée par la paroi délimitant le fond de la chambre amont et un couvercle 25 présentant le court manchon.

Ce couvercle peut par exemple être vissé.

Ainsi, on réduit le nombre de composants le parcours de l'eau lorsque la disconnection est simplifiée.

On dispose d'un produit extrêmement compact avec une possibilité d'échanger facilement les différentes pièces.

## Revendications

1. Dispositif de contrôle de l'écoulement d'un fluide comprenant un corps (3) délimitant une chambre (4) dite intermédiaire présentant une entrée (5), une sortie (6) et une conduite (7) d'évacuation, laquelle conduite (7) d'évacuation est contrôlée par une soupape différentielle (2) comprenant elle-même un obturateur (8) déplacé par une membrane (9) immobilisée en périphérie dont l'une (10) dite amont de ses deux faces (10, 11) est soumise à la pression prélevée en amont de la chambre intermédiaire et l'autre (11) dite aval soumise à la pression du fluide dans ladite chambre intermédiaire,
ce dispositif étant **CARACTERISE en ce que** :
- la membrane (9) présente en son centre une découpe (15),
- la zone de la face (11) dite aval bordant cette découpe (15) constitue l'obturateur prenant appui sur son siège (16) et
- la zone de la face (10) dite amont bordant cette découpe porte un piston (17) creux axé sur la dite découpe (15), lequel piston creux constitue localement la conduite (7) d'évacuation.

2. Dispositif selon la revendication 1 **caractérisé en ce que** la face externe (18) du piston (17) creux constitue localement une portée de guidage en translation de ce piston.

3. Dispositif selon la revendication 2 **caractérisé en ce que** le corps du dispositif présente un court manchon (19) de longueur suffisante pour, avec la face externe du piston, réaliser ce guidage suffisant.

4. Dispositif selon la revendication 1 **caractérisé en ce que** le piston (17) creux présente en sa partie supérieure, c'est à dire celle en contact avec la membrane, une collerette (17A) sur laquelle se fixe la partie centrale de la membrane.

5. Dispositif selon la revendication 4 **caractérisé en ce qu'**est prévu un lamage (20) au niveau de la face d'appui de la collerette sur la membrane.

6. Dispositif selon la revendication 1 **caractérisé en ce que** le siège de l'obturateur est formé par une nervure formant un anneau.

7. Dispositif selon la revendication 1 **caractérisé en ce que** l'obturateur est plan.

8. Dispositif selon la revendication 1 **caractérisé en ce que** l'obturateur est légèrement convexe.

9. Dispositif selon la revendication 1 **caractérisé en ce que** :
- les conduites d'entrée et de sortie sont coaxiales et sont donc pourvues chacune d'un clapet anti-retour et entre les deux clapets est prévu un court tronçon de liaison,
- en amont du clapet anti-retour situé sur la conduite d'entrée est réalisé un canal (21) qui débouche dans une chambre (22) dite de transition qui s'étend sous la surface occupée par la membrane et
- cette chambre (22) de transition communique avec une chambre (23) dite chambre amont délimitée localement par la face dite amont de la membrane et une pièce (24) montée amovible venant pincer le bord de cette membrane.

10. Dispositif selon la revendication 9 **caractérisé en ce que** la chambre de transition est délimitée par la paroi délimitant le fond de la chambre amont et un couvercle (25) présentant le court manchon.

## Patentansprüche

1. Vorrichtung zur Kontrolle des Fließens eines Fluids bzw. einer Flüssigkeit, die umfasst einen Körper (3), der eine so genannte Zwischenkammer (4) begrenzt, die eine Eintrittsrohrleitung (5), eine Austrittsrohrleitung (6) und eine Evakuierungsrohrleitung (7) umfasst, wobei letztere durch ein Differentialventil (2) geregelt bzw. gesteuert wird, das seinerseits einen Verschluss (8) aufweist, der durch eine am Rand befestigte Membran (9) verschoben wird, wobei die Membran zwei Flächen (10, 11) aufweist, von denen eine, die stromaufwärts gelegene Fläche (10), dem Druck ausgesetzt ist, der stromabwärts von der Zwischenkammer entnommen wird, und die andere, die stromabwärts gelegene Fläche (11), dem Druck des Fluids (der Flüssigkeit) in der Zwischenkammer ausgesetzt ist,
wobei die Vorrichtung **dadurch gekennzeichnet ist, dass**
- die Membran (9) in ihrem Zentrum einen Ausschnitt (15) aufweist,
- die Zone der stromabwärts gelegenen Fläche (11), die an diesen Ausschnitt (15) angrenzt, den Verschluss darstellt, der auf seinem Sitz (Unterlage) (16) aufliegt, und
- die Zone der stromaufwärts gelegenen Fläche (10), die an diesen Ausschnitt angrenzt, einen hohlen Kolben (17) trägt, der auf den Ausschnitt (15) ausgerichtet ist und lokal die Evakuierungsrohrleitung (17) darstellt.

2. Vorrichtung nach Anspruch 1, **dadurch gekennzeichnet, dass** die äußere Fläche (18) des hohlen Kolbens (17) lokal einen Führungsbereich bei der Translation des Kolbens darstellt.

3. Vorrichtung nach Anspruch 2, **dadurch gekennzeichnet, dass** der Körper der Vorrichtung eine kurze Hülse (19) aufweist, deren Länge ausreicht, um mit der äußeren Fläche des Kolbens eine ausreichende Führung zu erzielen.

4. Vorrichtung nach Anspruch 1, **dadurch gekennzeichnet, dass** der hohle Kolben (17) in seinem oberen Abschnitt, d.h. im Kontakt mit der Membran, einen Flansch (17A) aufweist, auf dem der zentrale Abschnitt der Membran fixiert ist.

5. Vorrichtung nach Anspruch 4, **dadurch gekennzeichnet, dass** im Bereich der Auflagefläche des Flansches auf der Membran eine Absenkung (20) vorgesehen ist.

6. Vorrichtung nach Anspruch 1, **dadurch gekennzeichnet, dass** der Sitz des Verschlusses durch eine Rippe gebildet wird, die einen Ring bildet.

7. Vorrichtung nach Anspruch 1, **dadurch gekennzeichnet, dass** der Verschluss eben ist.

8. Vorrichtung nach Anspruch 1, **dadurch gekennzeichnet, dass** der Verschluss leicht konvex ist.

9. Vorrichtung nach Anspruch 1, **dadurch gekennzeichnet, dass**
- die Eintritts- und Austritts-Rohrleitungen coaxial sind und jeweils mit einem Rückschlagventil ausgestattet sind, wobei zwischen den beiden Ventilen ein kurzes Verbindungsstück vorgesehen ist,
- stromaufwärts von dem Rückschlagventil, das in der Eintrtitts-Rohrleitung angeordnet ist, ein Kanal (21) vorgesehen ist, der in eine so genannte Übergangskammer (22) mündet, die sich unterhalb der Oberfläche erstreckt, die von der Membran belegt ist, und
- diese Übergangskammer (22) in Verbindung steht mit einer Kammer (23), der so genannten stromaufwärts gelegenen Kammer, die lokal begrenzt ist von der stromaufwärts gelegenen Fläche der Membran und einem Element (24), das abnehmbar daran befestigt ist und den Rand dieser Membran festklemmt.

10. Vorrichtung nach Anspruch 9, **dadurch gekennzeichnet, dass** die Übergangskammer begrenzt ist von der Wand, die den Boden der stromaufwärts gelegenen Kammer bildet, und einer Abdeckung (25), welche die kurze Hülse darstellt.

## Claims

1. Fluid flow control device comprising a body (3) delineating a chamber (4) called the intermediate chamber, with an inlet (5), an outlet (6) and a discharge line (7), this discharge line (7) being controlled by a differential valve (2) itself comprising a blanking-off device (8) moved by a diaphragm (9) immobilised at the periphery, one face of which (10) called the upstream face of its two faces (10, 11), is subjected to the pressure taken upstream of the intermediate chamber and the other (11) called the downstream face is subjected to the pressure of the fluid in the said intermediate chamber, this device being **characterised in that**:
- there is a cut-out (15) at the centre of the diaphragm (9),
- the region of what is called the downstream face (11) bordering this cut-out (15) is the blanking-off device supported on its seat (16), and
- the region of what is called the upstream face (10) bordering this cut-out carries a hollow piston (17) centered on the said cut-out (15), this hollow piston locally constituting the discharge line (7).

2. Device according to Claim 1, **characterised in that** the outer face (18) of the hollow piston (17) locally constitutes a bearing face for guiding this piston in linear movement.

3. Device according to Claim 2, **characterised in that** the body of the device has a short sleeve (19) which is long enough, with the outer face of the piston, to perform this guiding satisfactorily.

4. Device according to Claim 1, **characterised in that** the hollow piston (17) has at its top, i.e. the part in contact with the diaphragm, a collar (17A) to which the centre part of the diaphragm is fixed.

5. Device according to Claim 4, **characterised in that** spot facing (20) is provided for at the level of the face supporting the collar on the diaphragm.

6. Device according to Claim 1, **characterised in that** the seat of the blanking-off device is formed by a rib forming a ring.

7. Device according to Claim 1, **characterised in that** the blanking-off device is flat.

8. Device according to Claim 1, **characterised in that** the blanking-off device is slightly convex.

9. Device according to Claim 1, **characterised in that**:
- the incoming and outgoing lines are coaxial and therefore each of them is provided with a non-return valve and between the two valves a short connecting piece is provided,
- upstream of the non-return valve located on the inlet line there is a channel (21) which ends in a chamber (22), called the transition chamber, which extends under the surface occupied by the diaphragm, and
- this transition chamber (22) communicates with a chamber (23) called the upstream chamber locally delineated by the said upstream face of the diaphragm and a part (24) which is fitted immovably and grips the edge of this diaphragm.

10. Device according to Claim 9, **characterised in that** the transition chamber is delineated by the wall delineating the bottom of the upstream chamber and a cover (25) which offers up the short sleeve.
